# FASCICULE DE BREVET EUROPEEN

(11) **EP 3 291 398 B1**
(45) Date de publication et mention de la délivrance du brevet: **17.11.2021**
(21) Numéro de dépôt: 17188072.7
(22) Date de dépôt: 28.08.2017
(51) Int. Cl.: H02H 1/06, H02J 9/06

(54) **UNITÉ DE CONTRÔLE D'UN DISJONCTEUR COMPORTANT UN SYSTÈME DE GESTION D'ALIMENTATION ÉLECTRIQUE ET DISJONCTEUR COMPORTANT UNE TELLE UNITÉ**
KONTROLLEINHEIT EINES ELEKTRISCHEN TRENNSCHALTERS, DIE EIN SYSTEM ZUR STEUERUNG DER STROMVERSORGUNG UMFASST, UND TRENNSCHALTER, DER EINE SOLCHE KONTROLLEINHEIT UMFASST
CONTROL UNIT OF A CIRCUIT BREAKER COMPRISING A POWER SUPPLY MANAGEMENT SYSTEM AND CIRCUIT BREAKER COMPRISING SUCH A UNIT

(30) Priorité: 29.08.2016 FR 1658006
(43) Date de publication de la demande: 07.03.2018
(73) Titulaire: Schneider Electric Industries SAS, 92500 Rueil-Malmaison (FR)
(72) Inventeur: SORIN, Joel, 38050 GRENOBLE Cedex 09 (FR); MASSEBOEUF, Bertrand, 38050 GRENOBLE Cedex 09 (FR); GEAY, Yves, 38050 GRENOBLE Cedex 09 (FR)
(74) Mandataire: Lavoix

(56) Documents cités:
- US-A1- 2010 321 837
- US-A1- 2012 126 625

## Description

L'invention concerne une unité de contrôle d'un disjoncteur comportant un système de gestion d'alimentation électrique.

Dans le domaine de la protection électrique, il est connu d'utiliser des unités de contrôle pour commander le déclenchement de disjoncteurs électriques. Une telle unité de contrôle est typiquement pourvue de microcontrôleurs et de microprocesseurs destinés à exécuter des fonctions de gestion du disjoncteur auquel l'unité de contrôle est associée, par exemple pour mesurer des grandeurs électriques relatives au fonctionnement du disjoncteur et pour communiquer ces mesures vers un point de collecte dédié en dehors de l'unité.

Cette unité de contrôle est pourvue d'un système de gestion d'alimentation électrique qui, lors de son fonctionnement, est connectée à des sources d'alimentation électrique de nature différente. Ces sources d'alimentation délivrent une puissance électrique entrante qui est utilisée pour alimenter électriquement les microcontrôleurs et les microprocesseurs, de manière à assurer leur fonctionnement.

Les unités de contrôle connues ont pour inconvénient qu'elles n'assurent pas de façon satisfaisante la gestion de l'alimentation électrique à partir de plusieurs sources électriques dont le niveau d'alimentation peut varier au cours du temps, par exemple lorsqu'une ou plusieurs sources d'alimentation sont interrompues ou retirées. En particulier, il existe un risque que, en cas de perte d'une ou plusieurs sources d'alimentation électrique, ou en cas de défaillance interne impliquant une surconsommation, l'unité de contrôle ne soit plus suffisamment alimentée en énergie pour assurer des fonctions de protection du disjoncteur. L'unité de contrôle n'est alors plus en mesure de commuter le disjoncteur si une situation anormale survient, ce qui est contraire à la sécurité. En outre, les systèmes de gestion d'alimentation des unités connues ne permettent pas d'assurer une maîtrise satisfaisante de la consommation électrique lors du fonctionnement de l'unité de contrôle.

Unités de contrôle de disjoncteurs avec plusieurs sources d'alimentation sont connues dans les documents US 2010/321837 et US 2012/126625. C'est à ces inconvénients qu'entend plus particulièrement remédier l'invention en proposant une unité de contrôle d'un disjoncteur électrique, qui comporte un système de gestion d'alimentation électrique capable de gérer des sources d'alimentation électrique distinctes, tout en garantissant que des fonctions de sécurité de l'unité de contrôle soient assurées en cas de modification du niveau de puissance électrique fournie par les sources d'alimentation électriques.

L'invention , définie par les caractéristiques de la revendication 1, a donc pour objet une unité de contrôle d'un disjoncteur, ladite unité de contrôle étant destinée à être associée à un disjoncteur électrique et à être reliée électriquement à des bornes d'entrée de ce disjoncteur et comportant :
- un module de sécurité, contenant un circuit intégré configuré pour émettre un ordre de commutation du disjoncteur lorsque ce module de sécurité détecte une anomalie de fonctionnement,
- plusieurs modules de calcul programmables, destinés à assurer des fonctions de gestion du disjoncteur, lorsque l'unité est associée au disjoncteur,
- un système de gestion d'alimentation électrique, comprenant une interface de connexion destinée à être raccordée à des sources d'alimentation électrique distinctes, pour recevoir une puissance électrique entrante délivrée par ces sources d'alimentation, cette interface étant raccordée électriquement au module de sécurité et aux modules de calcul pour sélectivement redistribuer la puissance électrique reçue vers le module de sécurité et les modules de calcul, le système de gestion d'alimentation étant configuré pour commuter automatiquement, en fonction du niveau de puissance électrique reçue depuis les sources d'alimentation électrique et en fonction d'un programme d'alimentation prédéfini, entre :
- au moins un mode d'alimentation actif, dans lequel le module de sécurité et au moins une partie des modules de calcul sont alimentés électriquement avec la puissance électrique entrante, et
- un mode d'alimentation de sécurité, dans lequel le module de sécurité est alimenté avec la puissance électrique entrante d'au moins une des sources d'alimentation et dans lequel lesdits modules de calcul sont isolés de l'interface de connexion et ne sont pas alimentés avec la puissance électrique entrante,
et dans lequel le système de gestion d'alimentation électrique est configuré pour commuter vers le mode d'alimentation de sécurité lorsque la puissance électrique reçue sur l'interface de connexion devient inférieure à un seuil minimal prédéfini, ce seuil minimal prédéfini étant fixé en fonction de la puissance électrique consommée par les modules de calcul.

Grâce à l'invention, lorsque les sources d'alimentation électrique ne sont plus en mesure d'assurer l'alimentation en énergie de l'unité de contrôle, le système de gestion d'alimentation alimente en priorité le module de sécurité au détriment des autres modules. La fiabilité et la sécurité de l'unité de contrôle est ainsi garantie.

Selon des aspects avantageux mais non obligatoires de l'invention, une telle unité peut incorporer une ou plusieurs des caractéristiques suivantes, prises seules ou dans toute combinaison techniquement admissible :
- Le dispositif de gestion d'alimentation comporte :
   - un rail d'alimentation externe destiné à être raccordé électriquement à une première source d'alimentation parmi les sources d'alimentation électrique et étant connecté aux modules de calcul de manière à alimenter électriquement les modules de calcul,
   - un rail d'alimentation interne, adapté pour être raccordé électriquement à une deuxième source d'alimentation parmi les sources d'alimentation électrique et étant raccordé électriquement au module de sécurité pour alimenter électriquement ce module de sécurité,
   - un interrupteur commandable, adapté pour raccorder ou isoler sélectivement le rail d'alimentation interne du rail d'alimentation extérieur en fonction du niveau de puissance électrique reçu par les rails d'alimentation interne et extérieur.
- Le système de gestion d'alimentation comporte en outre :
   - une unité de stockage d'énergie électrique,
   - un rail d'alimentation commun, connecté électriquement à l'unité de stockage
   le système de gestion d'alimentation étant configuré pour raccorder électriquement le rail d'alimentation commun et l'unité de stockage aux modules de calcul lorsque la puissance électrique fournie par les autres sources d'alimentation électrique devient inférieure à un seuil prédéfini, de manière maintenir les modules de calcul temporairement alimentés par l'unité de stockage.
- L'unité de contrôle comporte en outre un bouton de réinitialisation, configuré à générer un signal de réinitialisation à destination d'au moins un des modules de calcul lorsqu'il est activé, le système de gestion d'alimentation étant en outre configuré pour déconnecter automatiquement le rail d'alimentation commun du rail d'alimentation interne et pour décharger l'unité de stockage lorsque le bouton de réinitialisation est activé.
- Le système de gestion d'alimentation comporte :
   - des unités de détection de tension chacune destinée à être associée à une source d'alimentation électrique et étant configurée pour émettre un signal d'activation lorsque cette unité de mesure détecte que la source d'alimentation correspondante génère une tension électrique supérieure ou égale à une valeur prédéterminée de tension, et
   - des portes logiques agencées pour déclencher la commutation entre le mode d'alimentation de sécurité et au moins un mode d'alimentation actif en fonction des signaux émis par les unités de détection.
- Le système de gestion d'alimentation est en outre configuré pour commuter automatiquement depuis le mode d'alimentation de sécurité vers un mode d'alimentation actif lorsque la puissance électrique reçue sur l'interface de connexion devient supérieure au seuil minimal prédéfini.
- Les modules de calcul comportent chacun un microprocesseur ou un microcontrôleur programmable.

Selon un autre aspect l'invention concerne un disjoncteur électrique, comportant une unité de contrôle associée, l'unité de contrôle étant selon l'invention et le disjoncteur comportant au moins une deuxième source d'alimentation électrique, raccordée à l'interface de connexion et étant connectée à des bornes d'entrée du disjoncteur de manière à être alimentée électriquement par le courant qui circule dans le disjoncteur lors du fonctionnement du disjoncteur.

L'invention sera mieux comprise et d'autres avantages de celle-ci apparaîtront plus clairement à la lumière de la description qui va suivre, d'un mode de réalisation d'une unité de contrôle donné uniquement à titre d'exemple et faite en référence aux dessins annexés dans lesquels :
- la figure 1 est un schéma synoptique simplifié d'une unité de contrôle d'un disjoncteur selon l'invention ;
- la figure 2 est un schéma simplifié d'un système de gestion d'alimentation électrique de l'unité de contrôle de la figure 1 ;
- la figure 3 est un ordinogramme d'un procédé de fonctionnement du système de gestion d'alimentation de la figure 2.

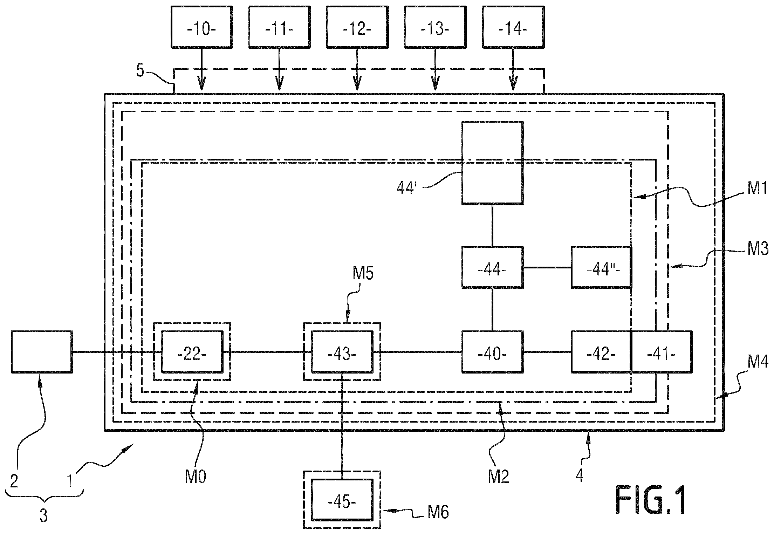

La figure 1 représente une unité de contrôle 1 pour un disjoncteur électrique 2. L'unité 1 est ici associée au disjoncteur 2 pour former un ensemble électrique 3. Plus précisément, ici, le disjoncteur 2 comporte l'unité de contrôle 1.

De façon connue, le disjoncteur 2 comporte des bornes d'entrée et de sortie de puissance qui sont sélectivement raccordés ou isolés électriquement l'un de l'autre par des contacts mobiles séparables du disjoncteur 2.

Par exemple, ces bornes d'entrée et de sortie de puissance sont destinées à être raccordées électriquement à un circuit électrique, ou réseau électrique, pour que ce dernier soit protégé par le disjoncteur 2.

L'unité 1 est destinée commander sélectivement l'ouverture du disjoncteur 2, c'est-à-dire la séparation des bornes d'entrée et de sortie en cas de détection d'une anomalie de fonctionnement telle qu'une surintensité ou un court-circuit, afin d'empêcher la circulation du courant électrique entre ces bornes.

Par exemple, l'unité de contrôle 1 est également configurée pour mesurer des grandeurs physiques représentatives du courant qui circule dans le disjoncteur 2.

A cet effet, l'unité 1 comporte un module de sécurité 22 configuré pour émettre un ordre de commutation du disjoncteur 2 lorsque ce module de sécurité détecte une anomalie de fonctionnement, par exemple au sein du réseau électrique protégé par le disjoncteur 2, telle qu'une surintensité ou un court-circuit.

Dans cet exemple, le module de sécurité 22 comporte un circuit électronique de type ASIC, pour « Application Specific Integrated Circuit » en langue anglaise.

L'unité de contrôle 1 comporte également plusieurs modules de calcul programmables, destinés à assurer des fonctions de gestion du disjoncteur 2. Par exemple, ces modules de calcul comportent un microprocesseur ou un microcontrôleur programmable. Les modules de calcul assurent ici des fonctions dites applicatives, distinctes des fonctions de sécurité assurées par le module de sécurité 22.

Dans cet exemple, l'unité de contrôle 1 comporte les modules de calcul suivants :
- un module de mesure 40, dit « monitoring and protection » en langue anglaise, configuré pour mesurer des grandeurs électriques relatives au courants et aux tensions électriques présentes dans le disjoncteur 2 lors de son fonctionnement, par exemple en vue de calculer des statistiques d'utilisation ;
- des modules applicatifs 41 et 42, adaptés pour gérer des fonctions applicatives de haut niveau, par exemple superviser des échanges de données avec un bus de communication extérieur ;
- un module de diagnostic 43, dit « trip cause indicator » en langue anglaise, adapté pour déterminer une cause de déclenchement du disjoncteur 2 ;
- un module de communication 44, dit « display and wireless » en langue anglaise, pourvu d'une interface de communication comportant un écran d'affichage 44' et d'une ou plusieurs interfaces de communication radio-fréquence 44". L'écran d'affichage 44' comporte des moyens de rétro-éclairage pouvant fonctionner dans un mode de faible intensité lumineuse ou dans un mode d'intensité lumineuse élevée.

Ces modules de calcul 40, 41, 42, 43 et 44 nécessitent une alimentation électrique pour fonctionner.

De façon optionnelle, l'unité 1 comporte en outre un module 45 de communication sans fil de type sans contact, par exemple de technologie NFC pour « Near Field Communication », adapté pour transmettre des informations contenues dans le module de diagnostic 43 vers un lecteur de données complémentaire extérieur à l'unité 1.

L'unité de contrôle 1 comporte en outre un système de gestion d'alimentation électrique 4 qui est pourvu d'une interface de connexion 5 destinée à être sélectivement raccordée à des sources d'alimentation électrique 10, 11, 12, et 13 afin de recevoir une puissance électrique entrante délivrée par ces sources d'alimentation.

A cet effet, l'interface 5 est raccordée électriquement au module de sécurité 22 et aux modules de calcul 40, 41, 42, 43, 44 et 45 pour leur redistribuer sélectivement la puissance électrique reçue.

Les sources d'alimentation peuvent être déconnectées de l'interface 5, ou peuvent cesser de fonctionner au cours du fonctionnement de l'unité 1, de façon prévue ou non. Des sources d'alimentation peuvent également être ajoutées sur l'interface 5 ou encore démarrer lors du fonctionnement de l'unité 1. Les sources 10, 11, 12 et 13 sont ici illustrées connectées à l'interface de connexion 5 mais, en pratique, il est possible que seule une ou plusieurs de ces sources soit connectée et fournit une puissance électrique à un instant donné.

Dans cet exemple, la source 10 est une source d'alimentation auxiliaire, adaptée pour délivrer une tension continue de 24 Volts. Cette source est par exemple alimentée depuis un onduleur ou une alimentation sécurisée extérieurs à l'ensemble électrique 1.

La source 11 représente ici une alimentation électrique fournie par un équipement informatique extérieur connecté à l'unité 1 au moyen d'un port de communication USB, pour « Universal Serial Bus » en langue anglaise. La source 11 est adaptée pour délivrer une tension continue de 5 Volts.

La source 12 est ici au moins un transformateur de courant disposé autour d'un conducteur de puissance du disjoncteur 2 pour délivrer une tension électrique tant qu'un courant électrique circule dans le disjoncteur 2. Ainsi, la source 12 peut cesser de fonctionner lorsque le disjoncteur 2 est dans un état ouvert.

La source 13 comporte ici un transformateur de tension, connecté aux bornes du disjoncteur 2 pour délivrer une tension électrique tant qu'une tension électrique est présente sur les bornes. Par exemple, la source 13 est en partie intégrée au sein de l'unité 1 et peut en être retirée et cesse alors de fonctionner.

Enfin, l'unité 1 est ici adapté pour être raccordé à une source d'énergie additionnelle 14 de type pile, par exemple rechargeable. Cette source 14 peut être omise.

Les sources 10 et 11 appartiennent ici à un premier groupe de sources d'alimentation, dites sources externes au disjoncteur 2.

Les sources 12 et 13 appartiennent ici à un deuxième groupe de sources d'alimentation, distinct du premier groupe, dit groupe de sources internes au disjoncteur 2.

Les sources 12 et 13 sont ici toujours présentes au sein du disjoncteur 2, même si elles peuvent, en totalité ou en partie, cesser de fournir une puissance électrique vers l'unité 1 pendant le fonctionnement du disjoncteur 2.

Au contraire, les sources 10 et 11 peuvent être déconnectées de l'unité 1 lors de son fonctionnement.

Le système de gestion 4 est configuré pour commuter automatiquement entre plusieurs modes d'alimentation distincts, en fonction du niveau de puissance électrique reçue depuis les sources d'alimentation 10, 11, 12 et 13 et la pile 14 et en fonction d'un programme d'alimentation prédéfini. Cette commutation permet d'adapter la consommation de l'unité 1 en fonction de la puissance électrique entrante.

Notamment, le système de gestion 4 est configuré pour commuter sélectivement entre un mode d'alimentation de sécurité M0 et au moins un mode d'alimentation actif, ici au nombre de quatre et notés M1, M2, M3 et M4.

Dans le mode d'alimentation de sécurité M0, le module de sécurité 22 est alimenté avec la puissance électrique entrante à partir de la ou des sources d'alimentation qui sont actives, c'est-à-dire qui fournissent une puissance électrique sur l'interface de connexion 5. Lesdits modules de calcul 40, 41, 42, 44 sont isolés de l'interface de connexion 5 et ne sont pas alimentés avec la puissance électrique entrante.

Dans chacun des modes d'alimentation actifs M1, M2, M3 et M4, le module de sécurité 22 et au moins une partie des modules de calcul 40, 41, 42, 43, 44 sont alimentés électriquement avec la puissance électrique entrante.

Le système de gestion d'alimentation 4 est notamment configuré pour commuter vers le mode d'alimentation de sécurité M0 lorsque la puissance électrique reçue sur l'interface de connexion 5 devient inférieure à un seuil minimal prédéfini, ce seuil minimal prédéfini étant fixé en fonction de la puissance électrique consommée par les modules de calcul 40, 41, 42 ,44 ainsi que l'écran d'affichage 44' et la ou les interfaces de communication radiofréquence 44".

Le système de gestion d'alimentation 4 est en outre configuré pour commuter automatiquement depuis le mode d'alimentation de sécurité M0 vers un des modes d'alimentation actifs M1, M2, M3, M4 lorsque la puissance électrique reçue sur l'interface de connexion 5 devient supérieure au seuil minimal prédéfini.

Ainsi, les fonctions de sécurité du disjoncteur 2 sont assurées par l'unité de contrôle 1 en cas de modification du niveau de puissance électrique fournie par les sources d'alimentation électriques 10, 11, 12 et 13.

Plus généralement, le système de gestion d'alimentation 4 est configuré pour commuter d'un mode d'alimentation actif M1, M2, M3, M4 vers un autre mode d'alimentation actif M1, M2, M3, M4 en fonction de la valeur de puissance électrique reçue franchit des valeurs de transition prédéterminées.

A titre illustratif, le mode d'alimentation M0 correspond ici au cas où seule la source 12 est active et fournit un premier niveau de puissance électrique. Par exemple, la source 12 fournit une puissance électrique entrante de 0,42W avec un courant de 20mA. Dans ce mode, le module 22 est alimenté. Les modules de calcul ne sont pas alimentés électriquement depuis l'interface 5.

Le mode M1 correspond ici au cas où seule la source 12 est active et fournit un deuxième niveau de puissance électrique entrante, supérieur au premier niveau de puissance. Par exemple, la source 12 fournit une puissance entrante de 2.2W avec un courant de 105mA. Dans ce mode M1, le module 22 ainsi que les modules de calcul 40, 42 et 43, sont activés et le module 44 est partiellement activé, par exemple avec les moyens de rétro-éclairage de l'écran d'affichage 44' fonctionnant en mode de basse intensité lumineuse.

Le mode M2 correspond ici au cas où la source 13 est active. Par exemple, la puissance électrique entrante est égale à 2,6W. Par rapport au mode d'alimentation M1, les mêmes modules sont activés. Seule la nature de la source d'alimentation est changée.

Le mode M3 correspond ici au cas où la source 11 est active. Par rapport au mode d'alimentation M2, le module de calcul 44 est alimenté électriquement en totalité, par exemple pour permettre aux moyens de rétro-éclairage de l'écran d'affichage 44' de fonctionner en mode d'intensité lumineuse maximale.

Enfin, le mode M4 correspond ici au cas où la source 10 est active. Par rapport au mode d'alimentation M3, le module de calcul 41 est ici alimenté électriquement en totalité, par exemple pour permettre l'exécution de fonctions supplémentaires.

En outre, le système 4 comporte ici à titre illustratif des modes d'alimentation électriques supplémentaires M5 et M6. Ces modes M5 et M6 ne sont ici pas gérés par le système de gestion d'alimentation 4 et peuvent être omis.

On note M5 un mode d'alimentation correspondant à l'alimentation du module de diagnostic 43 par la pile 14. Cela permet d'assurer un mode de secours de son alimentation indépendamment du mode d'alimentation M0.

On note M6 un mode dans lequel la puissance entrante est nulle, c'est-à-dire que l'unité 1 n'est pas en fonctionnement. Ce mode M6 correspond au fonctionnement du module de communication sans fil 45, ce dernier étant apte à fonctionner uniquement grâce à une puissance électrique fournie par un lecteur radiofréquence de données.

Les modes d'alimentation actifs M1, M2, M3 et M4 sont de préférence définis préalablement ou de manière dynamique, à partir de la connaissance des niveaux de puissance électriques aptes à être fournis par chacune des sources d'alimentation et de la consommation électrique de chacun des modules de calcul. En d'autres termes, chaque mode d'alimentation M1, M2, M3 et M4 est associé à une combinaison spécifique de sources d'alimentation parmi les sources d'alimentation 10, 11, 12 et 13 fournissant une puissance électrique donnée. Pour chaque mode d'alimentation M1, M2, M3 et M4, seuls les modules de calcul qui peuvent être alimentés avec cette puissance électrique sont destinés à être mis en fonctionnement dans ce mode d'alimentation.

Ainsi, le nombre et la nature des modes d'alimentation dépendent des modules de calcul et des sources d'alimentation qui sont destinées à être reçues sur l'interface 5 et peuvent donc être différents.

Cette disposition permet d'assurer une maîtrise satisfaisante de la consommation électrique lors du fonctionnement de l'unité de contrôle 1.

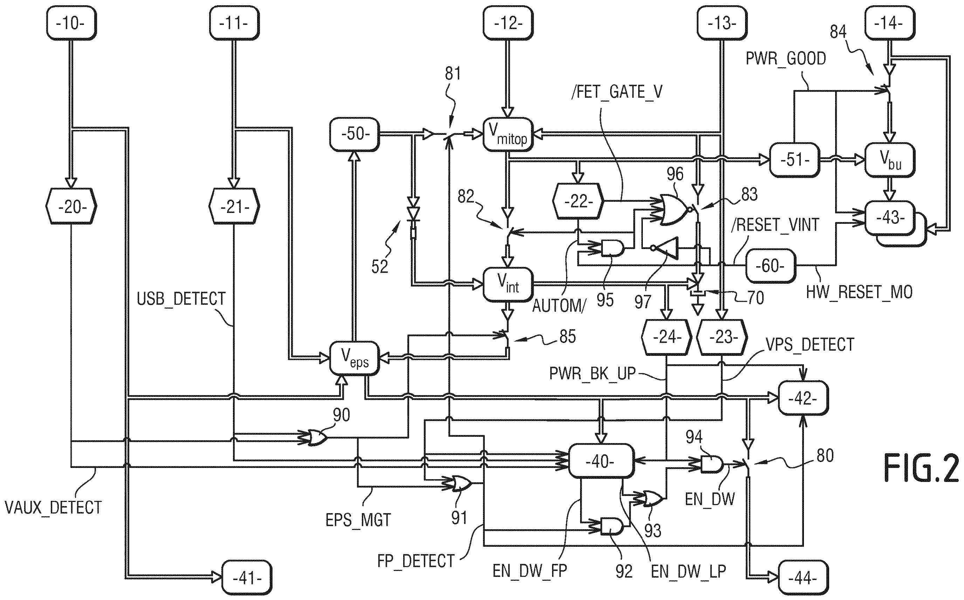

Comme illustré à la figure 2, le système de gestion d'alimentation 4 comporte ici un rail d'alimentation externe Veps et un rail d'alimentation interne Vmitop.

A la figure 2, les différents éléments du système de gestion 4 sont représentés de façon simplifiée sous la forme de blocs reliés entre eux par des traits. Les traits épais symbolisent des connexions électriques d'alimentation, alors que les traits fins symbolisent des liaisons de données. Par exemple, la liaison de données est un signal électrique pouvant prendre deux valeurs, chacune associée à un état logique. Ici, une tension continue de 3,3 Volts correspond à un état actif alors qu'une tension nulle correspond à un état inactif.

Le rail d'alimentation extérieur Veps est destiné à être raccordé électriquement aux sources d'alimentation 10 et/ou 11 et est connecté électriquement aux modules de calcul 40, 42, et 44 de manière à les alimenter électriquement lorsque les sources 10 et/ou 11 sont actives. Ces modules de calcul sont soit raccordés directement au rail Veps, soit raccordés par l'intermédiaire d'un interrupteur commandable.

Ici, le module 41 est directement relié à l'interface 5 pour être alimenté directement par la source 10 sans passer par le rail Veps. De cette façon, ce module 41 n'est apte à être alimenté électriquement que lorsque la source 10 est présente.

La façon dont les modules d'alimentation sont connectés, soit directement à la source 10 et/ou 11 soit par l'intermédiaire du au rail d'alimentation Veps dépend de la façon dont sont définis les modes d'alimentation actifs M1, M2, M3 et M4.

Le rail d'alimentation interne Vmitop est adapté pour être raccordé électriquement aux sources d'alimentation 12, 13 et est raccordé électriquement au module de sécurité 22 pour alimenter électriquement ce module de sécurité 22.

Les rails d'alimentation Vmitop et Veps font ici partie de l'interface de connexion 5.

Le système 4 comporte ici un convertisseur de puissance 50 et un interrupteur commandable 81 pour raccorder le rail d'alimentation Veps au rail d'alimentation Vmitop.

L'interrupteur commandable 81 est adapté pour raccorder ou isoler sélectivement le rail d'alimentation interne Vmitop du rail d'alimentation extérieur Veps en fonction du niveau de puissance électrique reçu par les rails d'alimentation interne et extérieur.

Par exemple, l'interrupteur 81 est un transistor de puissance de type MOSFET.

Ici, l'interrupteur 81 est par défaut dans un état bloquant et ne commute vers un état passant que lorsqu'il reçoit un signal FP_DETECT sur une électrode de commande.

Dans cet exemple, comme la source 12 présente une fiabilité plus importante, du fait de son positionnement au sein du disjoncteur 2 et du fait qu'elle reste alimentée tant que le disjoncteur 2 reste en fonctionnement dans l'état fermé, c'est celle-ci qui alimente en priorité le module 22 lorsque les autres sources 10, 11 et/ou 13 cessent de fonctionner.

Ainsi, la transition vers le mode M0 est notamment réalisée en déconnectant le rail d'alimentation Veps du rail d'alimentation Vmitop lorsque les sources 10 et 11 cessent de fonctionner, de manière à ce que la puissance électrique fournie par la source 12 n'alimente pas les modules de calcul, ici 40, 41, 42 et 44.

Le système de gestion 4 comporte ici des unités de détection associées à des sources d'alimentation électrique de l'interface de connexion 5. Chaque unité de détection est adaptée pour détecter que la source électrique à laquelle elle est associée est active. Par exemple, chaque unité de détection mesure la tension fournie par la source à laquelle elle est associée et émet un signal de détection lorsque cette tension est supérieure à une valeur prédéterminée de tension, par exemple la valeur nominale de tension de cette source de tension.

On note 20, 21 et 23 des unités de mesure respectivement associées aux sources 10, 11 et 13. On note également VAUX_DETECT, USB_DETECT et VPS_DETECT les signaux respectifs des unités de mesure 20, 21 et 23.

Le système 4 comporte également des portes logiques, agencées pour déclencher la commutation entre le mode d'alimentation de sécurité M0 et les modes d'alimentation M1, M2, M3 et M4 en fonction des signaux émis par les unités de détection, notamment en commandant l'interrupteur 81.

L'utilisation de portes logiques pour assurer le passage entre les modes d'alimentation électrique permet un fonctionnement plus rapide du système de gestion 4 qu'en utilisant un microprocesseur dédié.

Dans cet exemple, le système 4 comporte :
- une porte logique 90 de type « OU» qui reçoit en entrée les signaux VAUX_DETECT et USB_DETECT et fournit un sortie un signal EPS_MGT ;
- une porte logique 91 « OU » qui reçoit les signaux EPS_MGT et VPS_DETECT pour former en sortie le signal FP_DETECT qui commande l'interrupteur 81.

Tant que les sources 10 et 11 sont actives, le signal FP_DETECT est émis, et maintient l'interrupteur 81 dans l'état passant. Dès que l'une des sources 10 et/ou 11 est interrompue, le signal FP_DETECT cesse d'être émis et l'interrupteur passe dans l'état bloquant.

Avantageusement, le système de gestion d'alimentation 4 comporte en outre une unité de stockage 70 d'énergie électrique, tel qu'un condensateur, et un rail d'alimentation commun Vint, connecté électriquement à l'unité de stockage 70.

Le système de gestion d'alimentation 4 est configuré pour raccorder électriquement le rail d'alimentation commun Vint et l'unité de stockage 70 aux modules de calcul lorsque la puissance électrique fournie par les deuxième sources d'alimentation électrique devient inférieure à un seuil prédéfini, de manière maintenir les modules de calcul temporairement alimentés par l'unité de stockage 70.

Ceci permet de fournir à ces modules de calcul, lorsque la puissance entrante devient insuffisante pour les maintenir en fonction, suffisamment d'énergie pour qu'ils aient le temps d'enregistrer les données en cours de traitement et de s'éteindre normalement.

Ici, l'unité de stockage 70 est connectée entre une masse électrique du système de gestion 4 et le rail d'alimentation Vint.

Un interrupteur commandable 85 est adapté pour raccorder ou isoler sélectivement le rail d'alimentation commun Vint du rail d'alimentation extérieur Veps en fonction du niveau de puissance électrique reçu par les rails d'alimentation interne et extérieur. Ici, l'interrupteur 85 est par défaut dans un état passant et ne commute vers un état bloquant que lorsqu'il reçoit le signal EPS_MGT sur une électrode de commande.

Le rail d'alimentation Vint est également connecté électriquement au convertisseur de puissance 50 par l'intermédiaire d'une liaison de puissance comprenant un groupe de protection 52 pourvu d'une diode, de manière à recharger l'unité de stockage 70 lorsque le système 4 est dans un état d'alimentation avec une puissance entrante suffisamment élevée.

Le système 4 est également pourvu d'une unité de détection 24, similaire aux unités de détection 20, 21 ou 23, ici associée au rail d'alimentation commun Vint et adaptée pour fournir un signal PWR_BK_UP lorsque le rail d'alimentation Vint est alimenté. Ce signal PWR_BK_UP permet de commander l'extinction des modules de calcul avant que la réserve d'énergie stockée dans l'unité de stockage 70 ne s'épuise.

Dans cet exemple, les modules 40 et 42 sont directement raccordés au rail d'alimentation Veps. L'unité 44 est raccordée au rail Veps par l'intermédiaire d'un interrupteur commandable 80 similaire à l'interrupteur 81 et commandé par un signal EN_DW.

Les signaux VAUX_DETECT, USB_DETECT et VPS_DETECT sont fournis sur des entrées de données du module 40. En réponse, lorsqu'il est alimenté, ce dernier calcule des signaux EN_DW_FP et EN_DW_LP qui sont indicatifs de l'état d'alimentation.

Le signal EN_DW est ainsi calculé au moyen :
- d'une porte logique 92 de type «ET», qui reçoit en entrée les signaux FP_DETECT et EN_DW_LP,
- d'une porte logique 93 de type «OU», qui reçoit en entrée le signal EN_DW_LP et la sortie de la porte logique 92,
- d'une porte logique 94 de type «ET», qui reçoit en entrée un signal PWR_BK_UP et la sortie de la porte logique 93, et qui fournit en sortie le signal EN DW.

Par ailleurs, avantageusement l'unité de contrôle 1 comporte un bouton de réinitialisation 60, configuré pour générer, lorsqu'il est activé, un signal de réinitialisation HW_RESET_M0 à destination d'au moins un des modules de calcul, ici du module de calcul 43. Par ailleurs, pour que la réinitialisation soit effective, la source d'alimentation 10 doit préalablement être déconnectée ou neutralisée. Enfin, il n'est pas nécessaire de déconnecter ou neutraliser les sources 10, 11, 12, 13 et 14 pour rendre effective la réinitialisation par activation du bouton de réinitialisation 60.

Le système de gestion d'alimentation 4 est en outre configuré pour déconnecter automatiquement le rail d'alimentation commun Vint du rail d'alimentation interne Vmitop et pour décharger l'unité de stockage 70 lorsque le bouton de réinitialisation 60 est activé.

Ici, à cet effet, le système 4 comporte un interrupteur commandable 82, raccordant sélectivement les rails d'alimentation Vint et Vmitop, ainsi qu'un interrupteur commandable 83 raccordant directement l'unité de stockage 70 à au rail d'alimentation Vmitop. Les interrupteurs 82 et 83 sont analogues à l'interrupteur 81 et sont par défaut dans leur état bloquant.

Le système de gestion 4 comporte en outre une porte logique 95 de type « ET », qui reçoit en entrée un signal /RESET_VINT généré par le bouton 60 lorsqu'il est activé et un signal AUTOMI généré par le module 22, une porte logique 97 « NOT » qui reçoit en entrée le signal /RESET VINT, et une porte logique 96 de type « NOR » à trois entrées, qui reçoit en entrée un signal /FET_GATE_V généré par le module 22, le signal fourni en sortie par la porte logique 97, et le signal fourni en sortie par la porte logique 95. L'interrupteur 82 est commandé par le signal de sortie de la porte logique 95 alors que l'interrupteur 83 est commandé par le signal de sortie de la porte logique 96. Ainsi, lorsque le bouton de réinitialisation 60 est activé, les interrupteurs 82 et 83 sont bloqués. Les modules 40, 42 et 44 sont alors privés d'alimentation et se réinitialisent. Dans cet exemple, le fonctionnement du module 43 est assuré indépendamment par la source 14. La source 14 n'est ici pas destinée à alimenter le module de sécurité 22, quel que soit le mode d'alimentation.

Le système 4 comporte ainsi un rail d'alimentation supplémentaire Vbu raccordé à une entrée d'alimentation du module 43. Le système 4 comporte également et un convertisseur de puissance 51 adapté pour alimenter le rail d'alimentation Vbu depuis le rail d'alimentation interne Vmitop. La source 14 est reliée au rail d'alimentation Vbat par un interrupteur commandable 84 piloté par le convertisseur de puissance 51. Plus précisément, l'interrupteur 84 isole le bus d'alimentation Vbu de la source 14 tant que l'alimentation est assurée par le rail d'alimentation interne Vmitop, ici au moyen d'un signal PWR_GOOD, et bascule dans un état passant lorsque le rail d'alimentation Vbat n'est plus alimenté par le rail d'alimentation Vmitop.

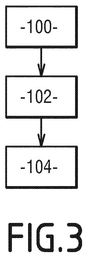

La figure 3 représente un exemple de fonctionnement du système de gestion 4.

Initialement, lors d'une étape 100, l'unité 1 est dans un état de fonctionnement normal, associé au disjoncteur 2 et se trouve dans un premier mode d'alimentation électrique. Par exemple, les sources d'alimentation électrique 10, 11, 12 et 13 sont raccordées à l'interface de connexion 5 et délivrent une puissance électrique entrante non nulle sur cette interface de connexion 5, de sorte que l'unité 1 est dans le mode d'alimentation M4.

Ensuite, lors d'une étape 102, la valeur de puissance électrique entrante diminue, par exemple parce qu'une des sources d'alimentation électrique 10, 11, 12 et 13 cesse de fonctionner et/ou est retirée. Dans cet exemple, les sources d'alimentation électrique 10, 11 et 13 cessent de fonctionner. La puissance électrique entrante devient inférieure au seuil minimal prédéfini.

Alors, lors d'une étape 104, le système de gestion 4 commande automatiquement la commutation vers le niveau d'alimentation M0. Ici, dès que les alimentations 10, 11 et 13 cessent de fonctionner, les unités de détection 20, 21 et 23 interrompent l'émission des signaux, respectivement, VAUX_DETECT, USB_DETECT et VPS_DETECT.

En conséquence, le signal FP_DETECT est interrompu et l'interrupteur 81 passe dans l'état bloquant, interrompant l'alimentation électrique du rail d'alimentation Veps et en l'isolant de l'interface de connexion 5 sur laquelle est encore connectée la source 12. L'unité 1 est alors dans l'état d'alimentation M0.

De cette manière, le module de sécurité 22 continue à être alimenté électriquement par la source 12, alors que les modules 40, 41, 42 et 44 ne sont plus alimentés électriquement par cette source 12. On évite ainsi que le fonctionnement du module de sécurité 22 ne soit interrompu.

Les modes de réalisation et les variantes envisagés ci-dessus peuvent être combinés entre eux pour générer de nouveaux modes de réalisation.

## Revendications

1. Unité de contrôle (1) d'un disjoncteur, ladite unité de contrôle étant destinée à être associée à un disjoncteur électrique (2) et à être reliée électriquement à des bornes d'entrée de ce disjoncteur et comportant :
- un module de sécurité (22), contenant un circuit intégré configuré pour émettre un ordre de commutation du disjoncteur lorsque ce module de sécurité détecte une anomalie de fonctionnement,
- plusieurs modules de calcul programmables (40, 41, 42, 43, 44), destinés à assurer des fonctions de gestion du disjoncteur, lorsque l'unité est associée au disjoncteur,
- un système de gestion d'alimentation électrique (4), comprenant une interface de connexion (5) destinée à être raccordée à des sources d'alimentation électrique (10, 11, 12, 13) distinctes, pour recevoir une puissance électrique entrante délivrée par ces sources d'alimentation, cette interface étant raccordée électriquement au module de sécurité (22) et aux modules de calcul (40, 41, 42, 44) pour sélectivement redistribuer la puissance électrique reçue vers le module de sécurité (22) et les modules de calcul (40, 41, 42, 44),
l'unité de contrôle (1) étant **caractérisée en ce que** le système de gestion d'alimentation (4) est configuré pour commuter automatiquement, en fonction du niveau de puissance électrique reçue depuis les sources d'alimentation électrique (10, 11, 12, 13) et en fonction d'un programme d'alimentation prédéfini, entre :
- au moins un mode d'alimentation actif (M1, M2, M3 M4), dans lequel le module de sécurité (22) et au moins une partie des modules de calcul (40, 41, 42, 43, 44) sont alimentés électriquement avec la puissance électrique entrante, et
- un mode d'alimentation de sécurité (M0), dans lequel le module de sécurité (22) est alimenté avec la puissance électrique entrante d'au moins une des sources d'alimentation (12,13) et dans lequel lesdits modules de calcul (40, 41, 42, 44) sont isolés de l'interface de connexion et ne sont pas alimentés avec la puissance électrique entrante.
et **en ce que** le système de gestion d'alimentation électrique (4) est configuré pour commuter vers le mode d'alimentation de sécurité (M0) lorsque la puissance électrique reçue sur l'interface de connexion (5) devient inférieure à un seuil minimal prédéfini, ce seuil minimal prédéfini étant fixé en fonction de la puissance électrique consommée par les modules de calcul (40, 41, 42, 43, 44).

2. Unité de contrôle selon la revendication 1, **caractérisée en ce que** le dispositif de gestion d'alimentation (1) comporte :
- un rail d'alimentation externe (Veps) destiné à être raccordé électriquement à une première source d'alimentation (10, 11) parmi les sources d'alimentation électrique et étant connecté aux modules de calcul (40, 42, 44) de manière à alimenter électriquement les modules de calcul,
- un rail d'alimentation interne (Vmitop), adapté pour être raccordé électriquement à une deuxième source d'alimentation (12, 13) parmi les sources d'alimentation électrique et étant raccordé électriquement au module de sécurité (22) pour alimenter électriquement ce module de sécurité (22),
- un interrupteur commandable (81), adapté pour raccorder ou isoler sélectivement le rail d'alimentation interne (Vmitop) du rail d'alimentation extérieur (Veps) en fonction du niveau de puissance électrique reçu par les rails d'alimentation interne et extérieur.

3. Unité de contrôle selon l'une des revendications précédentes, **caractérisée en ce que** le système de gestion d'alimentation (4) comporte en outre :
- une unité de stockage (70) d'énergie électrique,
- un rail d'alimentation commun (Vint), connecté électriquement à l'unité de stockage (70)
le système de gestion d'alimentation (4) étant configuré pour raccorder électriquement le rail d'alimentation commun et l'unité de stockage (70) aux modules de calcul lorsque la puissance électrique fournie par les deuxième sources d'alimentation électrique devient inférieure à un seuil prédéfini, de manière maintenir les modules de calcul temporairement alimentés par l'unité de stockage (70).

4. Unité de contrôle selon la revendication 3, **caractérisée en ce qu'**elle comporte en outre un bouton de réinitialisation (60), configuré à générer un signal de réinitialisation à destination d'au moins un des modules de calcul (43) lorsqu'il est activé, le système de gestion d'alimentation étant en outre configuré pour déconnecter automatiquement le rail d'alimentation commun (Vint) du rail d'alimentation interne (Vmitop) et pour décharger l'unité de stockage (70) lorsque le bouton de réinitialisation est activé.

5. Unité de contrôle selon l'une des revendications précédentes, **caractérisée en ce que** le système de gestion d'alimentation (4) comporte :
- des unités de détection de tension (20, 21, 23) chacune destinée à être associée à une source d'alimentation électrique (10, 11, 13) et étant configurée pour émettre un signal d'activation lorsque cette unité de mesure détecte que la source d'alimentation correspondante génère une tension électrique supérieure ou égale à une valeur prédéterminée de tension, et
- des portes logiques (90, 91, 92, 93, 94, 95, 96, 97) agencées pour déclencher la commutation entre le mode d'alimentation de sécurité et le au moins un mode d'alimentation actif en fonction des signaux émis par les unités de détection.

6. Unité de contrôle selon l'une des revendications précédentes, **caractérisée en ce que** le système de gestion d'alimentation (4) est en outre configuré pour commuter automatiquement depuis le mode d'alimentation de sécurité (M0) vers un mode d'alimentation actif (M1, M2, M3, M4) lorsque la puissance électrique reçue sur l'interface de connexion (5) devient supérieure au seuil minimal prédéfini.

7. Unité de contrôle selon l'une des revendications précédentes, **caractérisée en ce que** les modules de calcul (40, 41, 42, 43, 44) comportent chacun un microprocesseur ou un microcontrôleur programmable.

8. Disjoncteur électrique (2), comportant une unité de contrôle (1) associée, **caractérisé en ce que** l'unité de contrôle est selon l'une quelconque des revendications précédentes, et **en ce que** le disjoncteur (2) comporte au moins une deuxième source d'alimentation électrique (12, 13), raccordée à l'interface de connexion (5) et étant connectée à des bornes d'entrée du disjoncteur de manière à être alimentée électriquement par le courant qui circule dans le disjoncteur lors du fonctionnement du disjoncteur.

## Patentansprüche

1. Steuereinheit (1) für einen Leistungsschalter, wobei die Steuereinheit vorgesehen ist, mit einem elektrischen Leistungsschalter (2) verbunden zu werden und elektrisch mit den Eingangsanschlüssen dieses Leistungsschalters verbunden zu werden, und aufweist:
- ein Sicherheitsmodul (22), das einen integrierten Schaltkreis enthält, der ausgebildet ist, einen Schaltbefehl für den Leistungsschalter auszugeben, wenn dieses Sicherheitsmodul eine Anomalie in der Funktionsweise feststellt,
- mehrere programmierbare Rechenmodule (40, 41, 42, 43, 44), die bestimmt sind, Verwaltungsfunktionen des Leistungsschalters auszuführen, wenn die Einheit dem Leistungsschalter zugeordnet ist,
- ein Verwaltungssystem (4) der elektrischen Versorgung, das eine Verbindungsschnittstelle (5) umfasst, die zur Verbindung mit unterschiedlichen elektrischen Versorgungsquellen (10, 11, 12, 13) vorgesehen ist, um eine eingehende elektrischen Leistung von diesen Versorgungsquellen zu empfangen, wobei die Schnittstelle elektrisch mit dem Sicherheitsmodul (22) und den Rechenmodulen (40, 41, 42, 44) verbunden ist, um die empfangene elektrische Leistung selektiv auf das Sicherheitsmodul (22) und die Rechenmodule (40, 41, 42, 44) umzuverteilen, wobei
die Steuereinheit (1) **dadurch gekennzeichnet ist, dass** das Verwaltungssystem (4) der elektrischen Versorgung konfiguriert ist, in Abhängigkeit der Höhe der von den elektrischen Versorgungsquellen (10, 11, 12, 13) empfangenen elektrischen Leistung und in Abhängigkeit von einem vordefinierten Leistungsplan automatisch zwischen:
- mindestens einem aktiven Versorgungsmodus (M1, M2, M3, M4), in dem das Sicherheitsmodul (22) und mindestens ein Teil der Rechenmodule (40, 41, 42, 43, 44) elektrisch mit der eingehenden elektrischen Leistung versorgt werden, und
- einem Sicherheitsversorgungsmodus (M0), bei dem das Sicherheitsmodul (22) mit der eingehenden elektrischen Leistung mindestens einer der Versorgungsquellen (12, 13) versorgt wird und bei dem die Rechenmodule (40, 41, 42, 44) von der Verbindungsschnittstelle isoliert sind und nicht mit der eingehenden elektrischen Leistung versorgt werden und dass das Verwaltungssystem (4) der elektrischen Versorgung konfiguriert ist, in den Sicherheitsversorgungsmodus (M0) umzuschalten, wenn die an der Verbindungsschnittstelle (5) empfangene elektrische Leistung unter einen vordefinierten Mindestschwellenwert sinkt, wobei dieser vordefinierte Mindestschwellenwert in Abhängigkeit von der von den Rechenmodulen (40, 41, 42, 43, 44) verbrauchten elektrischen Leistung festgelegt wird.

2. Steuereinheit nach Anspruch 1, **dadurch gekennzeichnet, dass** die Versorgungsverwaltungsvorrichtung (1) aufweist:
- eine externe Versorgungsschiene (Veps), die vorgesehen ist, mit einer ersten Versorgungsquelle (10, 11) der elektrischen Versorgungsquellen elektrisch verbunden zu werden und die mit den Rechenmodulen (40, 42, 44) verbunden ist, um die Rechenmodule elektrisch zu versorgen,
- eine interne Versorgungsschiene (Vmitop), die geeignet ist, elektrisch mit einer zweiten Versorgungsquelle (12, 13) der Versorgungsquellen verbunden zu werden und die elektrisch mit dem Sicherheitsmodul (22) verbunden ist, um dieses Sicherheitsmodul (22) elektrisch zu versorgen,
- einen steuerbaren Schalter (81), der geeignet ist, die interne Versorgungsschiene (Vmitop) in Abhängigkeit von der Höhe der von der internen und der externen Versorgungsschiene empfangenen elektrischen Leistung selektiv mit der externen Versorgungsschiene (Veps) zu verbinden oder von ihr zu trennen.

3. Steuereinheit nach einem der vorhergehenden Ansprüche, **dadurch gekennzeichnet, dass** das Verwaltungssystem (4) der elektrischen Versorgung außerdem aufweist:
- eine elektrische Energiespeichereinheit (70),
- eine gemeinsame Versorgungsschiene (Vint), die elektrisch mit der Speichereinheit (70) verbunden ist,
wobei das Verwaltungssystem (4) der elektrischen Versorgung konfiguriert ist, die gemeinsame Versorgungsschiene und die Speichereinheit (70) elektrisch mit den Rechenmodulen zu verbinden, wenn die von den zweiten elektrischen Versorgungsquellen gelieferte elektrische Leistung unter einen vordefinierten Schwellenwert fällt, um die Rechenmodule zeitweise von der Speichereinheit (70) mit Energie versorgt zu halten.

4. Steuereinheit nach Anspruch 3, **dadurch gekennzeichnet, dass** sie ferner eine Rücksetztaste (60) aufweist, die konfiguriert ist, bei ihrer Aktivierung ein Rücksetzsignal für mindestens eines der Rechenmodule (43) zu erzeugen, wobei das Versorgungsverwaltungssystem außerdem konfiguriert ist, automatisch die gemeinsame Versorgungsschiene (Vint) von der internen Stromschiene (Vmitop) zu trennen und die Speichereinheit (70) zu entladen, wenn die Rücksetztaste aktiviert wird.

5. Steuereinheit nach einem der vorhergehenden Ansprüche, **dadurch gekennzeichnet, dass** das Versorgungsverwaltungssystem (4) aufweist:
- Spannungserfassungseinheiten (20, 21, 23), die jeweils vorgesehen sind, einer elektrischen Versorgungsquelle (10, 11, 13) zugeordnet zu werden und konfiguriert sind, ein Aktivierungssignal zu senden, wenn diese Messeinheit detektiert, dass die entsprechende Versorgungsquelle eine elektrische Spannung erzeugt, die größer oder gleich einem vorbestimmten Spannungswert ist, und
- Logikgatter (90, 91, 92, 93, 94, 95, 96, 97), die ausgebildet sind, in Abhängigkeit von Signalen von den Erfassungseinheiten das Umschalten zwischen dem Sicherheitsversorgungsmodus und dem mindestens einen aktiven Versorgungsmodus auszulösen.

6. Steuereinheit nach einem der vorhergehenden Ansprüche, **dadurch gekennzeichnet, dass** das Versorgungsverwaltungssystem (4) außerdem konfiguriert ist, automatisch vom Sicherheitsversorgungsmodus (M0) in einen aktiven Versorgungsmodus (M1, M2, M3, M4) umzuschalten, wenn die an der Verbindungsschnittstelle (5) empfangene elektrische Leistung höher als der vordefinierte Mindestschwellenwert wird.

7. Steuereinheit nach einem der vorhergehenden Ansprüche, **dadurch gekennzeichnet, dass** die Rechenmodule (40, 41, 42, 43, 44) jeweils einen programmierbaren Mikroprozessor oder Mikrocontroller aufweisen.

8. Elektrischer Leistungsschalter (2), der eine zugeordnete Steuereinheit (1) aufweist, **dadurch gekennzeichnet, dass** die Steuereinheit einem der vorhergehenden Ansprüche entspricht, und dass der Leistungsschalter (2) mindestens eine zweite elektrische Versorgungsquelle (12, 13) aufweist, die mit der Verbindungsschnittstelle (5) verbunden ist und mit Eingangsanschlüssen des Leistungsschalters verbunden ist, um von dem im Leistungsschalter fließenden Strom während des Betriebs des Leistungsschalters elektrisch versorgt zu werden.

## Claims

1. Control unit (1) of a circuit breaker, said control unit being intended to be associated with an electric circuit breaker (2) and to be electrically connected to input terminals of the circuit breaker and comprising:
- a safety module (22) containing an integrated circuit which is configured to transmit a command for switching of the circuit breaker when the safety module detects an operating anomaly,
- a plurality of programmable computation modules (40, 41, 42, 43, 44) which are to perform functions of managing the circuit breaker when the unit is associated with the circuit breaker,
- a power supply management system (4) comprising a connection interface (5) which is to be connected to distinct power supply sources (10, 11, 12, 13) in order to receive an incoming electrical power delivered by the power supply sources, the interface being electrically connected to the safety module (22) and to the computation modules (40, 41, 42, 44) in order to selectively redistribute the received electrical power to the safety module (22) and the computation modules (40, 41, 42, 44),
the control unit (1) being **characterised in that** the power supply management system (4) is configured to switch automatically, according to the level of electrical power received from the power supply sources (10, 11, 12, 13) and according to a predefined power supply programme, between:
- at least one active power supply mode (M1, M2, M3, M4), in which the safety module (22) and at least some of the computation modules (40, 41, 42, 43, 44) are electrically supplied with the incoming electrical power, and
- a safety power supply mode (M0), in which the safety module (22) is supplied with the incoming electrical power of at least one of the power supply sources (12, 13) and in which said computation modules (40, 41, 42, 44) are isolated from the connection interface and are not supplied with the incoming electrical power,
and **in that** the power supply management system (4) is configured to switch to the safety power supply mode (M0) when the electrical power received at the connection interface (5) falls below a predefined minimum threshold, the predefined minimum threshold being fixed according to the electrical power consumed by the computation modules (40, 41, 42, 43, 44).

2. Control unit according to claim 1, **characterised in that** the power supply management device (1) comprises:
- an external power supply rail (Veps) which is to be electrically connected to a first power supply source (10, 11) from among the power supply sources and is connected to the computation modules (40, 42, 44) so as to supply power to the computation modules,
- an internal power supply rail (Vmitop) which is adapted to be electrically connected to a second power supply source (12, 13) from among the power supply sources and is electrically connected to the safety module (22) in order to supply power to the safety module (22),
- a controllable switch (81) which is adapted to selectively connect or isolate the internal power supply rail (Vmitop) to or from the external power supply rail (Veps) according to the level of electrical power received by the internal and external power supply rails.

3. Control unit according to any one of the preceding claims, **characterised in that** the power supply management system (4) further comprises:
- an electrical energy storage unit (70),
- a common power supply rail (Vint), which is electrically connected to the storage unit (70),
the power supply management system (4) being configured to electrically connect the common power supply rail and the storage unit (70) to the computation modules when the electrical power supplied by the second power supply sources falls below a predefined threshold, so as to keep the computation modules temporarily supplied with power by the storage unit (70).

4. Control unit according to claim 3, **characterised in that** it further comprises a reset button (60) which is configured to generate a reset signal to be sent to at least one of the computation modules (43) when it is activated, the power supply management system further being configured to automatically disconnect the common power supply rail (Vint) from the internal power supply rail (Vmitop) and to discharge the storage unit (70) when the reset button is activated.

5. Control unit according to any one of the preceding claims, **characterised in that** the power supply management system (4) comprises:
- voltage detection units (20, 21, 23), each of which is to be associated with a power supply source (10, 11, 13) and is configured to transmit an activation signal when the measurement unit detects that the corresponding power supply source generates an electrical voltage greater than or equal to a predetermined voltage value, and
- logic gates (90, 91, 92, 93, 94, 95, 96, 97) which are arranged to trigger switching between the safety power supply mode and the at least one active power supply mode according to the signals transmitted by the detection units.

6. Control unit according to any one of the preceding claims, **characterised in that** the power supply management system (4) is further configured to switch automatically from the safety power supply mode (M0) to an active power supply mode (M1, M2, M3, M4) when the electrical power received at the connection interface (5) exceeds the predefined minimum threshold.

7. Control unit according to any one of the preceding claims, **characterised in that** the computation modules (40, 41, 42, 43, 44) each comprise a microprocessor or a programmable microcontroller.

8. Electrical circuit breaker (2), comprising an associated control unit (1), **characterised in that** the control unit is in accordance with any one of the preceding claims, and **in that** the circuit breaker (2) comprises at least a second power supply source (12, 13) which is connected to the connection interface (5) and is connected to input terminals of the circuit breaker so as to be supplied with power by the current which flows in the circuit breaker during operation of the circuit breaker.
